# EUROPÄISCHE PATENTANMELDUNG

(11) **EP 1 034 971 A2**
(43) Veröffentlichungstag der Anmeldung: **13.09.2000**
(21) Anmeldenummer: 00102037.9
(22) Anmeldetag: 02.02.2000
(51) Int. Cl.: B60N 2/08

(54) **Kraftfahrzeugsitz**

(30) Priorität: 08.03.1999 DE 19910086
(71) Anmelder: DaimlerChrysler AG, 70567 Stuttgart (DE)
(72) Erfinder: Schmidt, Bernd, 72218 Wildberg (DE); Schrom, Ralf-Henning, 72108 Rottenburg (DE); Schulz, Volkmar, 96479 Weitransdorf (DE)

(57) **Zusammenfassung**

Es wird ein Kraftfahrzeug mit wenigstens einem seitlich eines Schwellers angeordneten Fahrgastsitz beschrieben. Der Fahrgastsitz ist auf in Längsrichtung des Kraftfahrzeuges verlaufenden und über ein Sitzuntergestell mit einem Fahrzeugboden fest verbundenen Sitzschienen angeordnet. Der Schweller und die an den Schweller angrenzende Sitzschiene weisen jeweils einander zugeordnete Sicherheitseinrichtungen auf, die in Längsrichtung des Kraftfahrzeugs auf Abstand zueinander angeordnet sind. Die Sicherheitseinrichtungen sind derart miteinander in Wirkverbindung bringbar, daß die Sitzschiene und der Schweller über die Sicherheitseinrichtungen bei einer hohen dynamischen Belastung des Fahrgastsitzes und/oder des Schwellers verbunden sind.

## Beschreibung

Die Erfindung betrifft ein Kraftfahrzeug mit wenigstens einem seitlich eines Schwellers angeordneten Fahrgastsitz nach der im Oberbegriff von Anspruch 1 näher definierten Art.

Fahrzeugsitze in Kraftfahrzeugen sind in unterschiedlichen Ausführungen bekannt, wobei sie meistens auf Längsschienen, welche auf einem Sitzuntergestell montiert sind, verschiebbar angeordnet sind. Zur Verstellung und Arretierung der Sitzposition sind in der Regel diverse Verbindungs- und Verriegelungseinrichtungen vorgesehen.

In der DE-GM 79 32 187 ist z.B. ein mit einer Sitzschiene verbundener Querträger für einen Fahrgastsitz in einem Fahrzeug beschrieben, an welchem das Gestell eines klappbaren Sitzes angelenkt ist, das in seiner normalen Stellung mit Hilfe einer Verriegelungsvorrichtung arretiert werden kann. Diese Verriegelungsvorrichtung weist ein hakenförmig ausgebildetes Element zum Feststellen des Fahrgastsitzes in seiner normalen Position auf, welches an dem kippbaren Gestell des Fahrgastsitzes befestigt ist. Um den Fahrgastsitz kippen zu können, ist eine Einrichtung zum Betätigen des hakenförmigen Elements vorgesehen, um die Verriegelung zu öffnen.

Nachteilig ist dabei jedoch, daß bei einem Front- und/oder Heckaufprall (Crash-Fall) die Sitzschiene sich aus ihrer Halterung lösen kann oder ein seitlicher Schweller des Kraftfahrzeuges einknicken kann und ein Fahrgast durch die daraus resultierende Bewegung des Fahrgastsitzes oder die Verkleinerung des Fahrgastinnenraumes verletzt werden kann.

In der EP 0 046 227 ist eine Vorrichtung in einem Kraftfahrzeug beschrieben, bei welcher kurze mit der Fahrzeugtür verbundene Bolzen in eine fest mit einer Sitzschiene verbundene Einrichtung bei geschlossener Fahrzeugtür eingreifen. Damit soll eine Verbindung zwischen der Fahrzeugtür und der Sitzschiene hergestellt werden, um eine relative Schiebebewegung zwischen diesen zu vermeiden und im Crash-Fall einen sicheren Abstand zwischen der Fahrzeugtür und dem Fahrgastsitz zu gewährleisten.

Dabei ist jedoch von Nachteil, daß sich die Sitzschiene bei hoher dynamischer Belastung des Fahrgastsitzes aus ihrer Befestigung mit dem Fahrzeug lösen kann und ein darauf sitzender Fahrgast verletzt werden kann. Weiter ist von Nachteil, daß ein seitlicher Schweller nur ungenügend gegen eine Verformung durch Einknicken bei einem Front- oder Heckaufprall gesichert ist.

Aus der DE 41 02 353 A1 ist ein Personenkraftwagen bekannt, bei dem die Vordersitze jeweils auf inneren und äußeren zueinander beabstandet angeordneten Sitzschienen verschiebbar sind. Der Personenkraftwagen weist seitliche Türschweller aus einem Leichtmetall-Strangpreßprofil auf, an das ein vorderes und ein hinteres Abstützlager für die äußere Sitzschiene angeschweißt ist Um eine zusätzliche dauerhafte formschlüssige Verbindung zu erhalten, weisen die Abstützlager einen nach oben vorstehenden Rand auf, der in eine nach unten zu offene Längsnut des Strangpreßprofils des Türschwellers eingreift. Diese Verbindung soll sicherstellen, daß sich die Sitzschiene bei einem Front- oder einem Heckaufprall nicht von dem Türschweller lösen kann, selbst wenn die Verschweißung des Abstützlagers mit der Innenwand des Türschwellers brechen würde.

Nachteilig ist jedoch dabei, daß diese zusätzliche formschlüssige Verbindung einen hohen Fertigungsaufwand erfordert und hohe Produktionskosten verursacht.

Der vorliegenden Erfindung liegt daher die Aufgabe zugrunde, ein Kraftfahrzeug, insbesondere ein Personenkraftfahrzeug mit wenigstens einem Fahrgastsitz zu schaffen, mit welcher bei einer Verunfallung des Kraftfahrzeugs eine möglichst große Sicherheit bietet, wobei insbesondere eine Verformung durch Längsdeformation eines seitlichen Schwellers bei einem Front- und/oder Heckaufprall vermieden werden kann.

Indem die erfindungsgemäßen Sicherheitseinrichtungen in Längsrichtung auf Abstand zueinander angeordnet sind, bilden diese erst bei Auftreten einer Relativbewegung zwischen Sitzschiene und Schweller eine wenigstens annähernd formschlüssige Verbindung miteinander aus.

Dabei ist von Vorteil, daß bei der Fertigung keine Sondertoleranzen beachtet werden müssen, und im normalen Betrieb des Kraftfahrzeugs Geräusche durch Aneinanderschlagen oder -reiben der beiden Sicherheitseinrichtungen unterbleiben.

Die beiden erfindungsgemäßen Sicherheitseinrichtungen sind vorteilhafterweise derart miteinander in Wirkverbindung bringbar, daß durch die bei einem Front- und/oder Heckaufprall entstehende Verbindung zwischen den Sicherheitseinrichtungen eine äußerst starke Koppelung der Sitzschiene und dem seitlichen Schweller gebildet wird. Damit wird eine zusätzliche Verbindung zwischen der Sitzschiene, dem Schweller und dem Fahrzeugboden verwirklicht, wodurch eine effektive Versteifung der Karosserie des Kraftfahrzeugs erreicht wird und eine Verformung des Schwellers durch Einknicken vermieden wird. Dies ist besonders bei einem Coupé von Vorteil, bei dem die Steifigkeit der Karosserie im wesentlichen durch die Bodengruppe bestimmt ist.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.

Es zeigt:
- Fig. 1: eine stark schematisierte dreidimensionale Darstellung eines Schwellers und einer Sitzschiene eines Kraftfahrzeugs, welche jeweils eine Sicherheitseinrichtung aufweisen;
- Fig. 2: eine Ansicht des Schwellers und der Sitzschiene im Schnitt gemäß der Linie II-II aus Fig. 1;
- Fig. 3: ein hakenförmig ausgebildetes Fangblech mit einer Aussparung, in welche ein Bolzen eingreift;
- Fig. 4: ein Fangblech mit einer Öffnung, in der ein Bolzen angeordnet ist;
- Fig. 5: ein doppelhakenförmig ausgebildetes Fangblech, welches an seinen Stirnseiten Aussparungen aufweist, in die jeweils ein Bolzen eingreift;
- Fig. 6: einen Schweller mit einer daran angeordneten Crash-Konsole, die mit einem Bolzen verbunden ist, der in ein hakenförmiges Fangblech einer Sitzschiene eingreift; und
- Fig. 7: einen Schweller mit einem daran angeordneten Stahlblechteil mit einem u-förmigen Abschnitt.

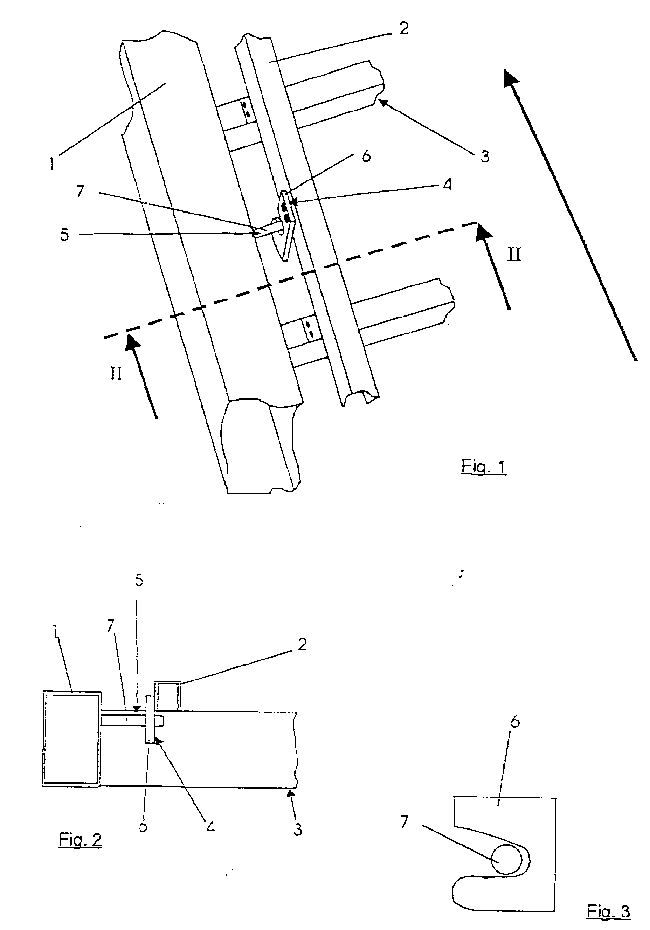

Fig. 1 zeigt eine stark schematisierte dreidimensionale Darstellung eines Schwellers 1 eines Kraftfahrzeugs und eine daran angrenzende Sitzschiene 2. Die Sitzschiene 2 ist auf einem Sitzuntergestell 3 fest mit einem nicht dargestellten Fahrzeugboden des Kraftfahrzeugs verbunden und verläuft in Fahrzeuglängsrichtung des Kraftfahrzeugs. Die Sitzschiene 2 ist mit einer weiteren parallelen Sitzschiene zur Aufnahme eines Fahrgastsitzes (nicht dargestellt) vorgesehen, welcher in Einbaulage auf den beiden Sitzschienen 2 verschieblich gelagert ist.

An dem Schweller 1 und an der Sitzschiene 2 ist jeweils eine Sicherheitseinrichtung 4, 5 vorgesehen, die in Längsrichtung des Kraftfahrzeugs auf Abstand zueinander angeordnet sind und derart miteinander in Wirkverbindung bringbar sind, daß über die Sicherheitseinrichtungen 4, 5 bei einer hohen dynamischen Belastung des Fahrgastsitzes und/oder des Schwellers 1 eine Verbindung zwischen dem Schweller 1 und der Sitzschiene 2 hergestellt wird.

Eine hohe dynamische Belastung kann beispielsweise durch einen Heck- und/oder Frontaufprall (Crash) des Kraftfahrzeugs verursacht werden und eine Relativbewegung zwischen der Sitzschiene 2 und dem Schweller 1 bewirken, durch die die Sicherheitseinrichtung 4 der Sitzschiene 2 und die Sicherheitseinrichtung 5 des Schwellers 2 in Anlage miteinander gebracht werden.

In dem vorliegenden Ausführungsbeispiel weist die Sicherheitseinrichtung 4 der Sitzschiene 2 ein hakenförmiges Fangblech 6 auf, welches mit einer Aussparung versehen ist und mit der Sitzschiene 2 verschweißt ist. Die Sicherheitseinrichtung 5 des Schwellers 1 weist einen Bolzen oder Stift 7 auf, der mit dem Schweller 1 verschweißt ist und in Einbaulage im Bereich der Aussparung des hakenförmigen Fangbleches 6 angeordnet ist, ohne es zu berühren.

Ein Crash-Fall kann zu einer Verformung der Karosserie des Kraftfahrzeuges sowie zu einer Verschiebung der Sitzschiene 2 im wesentlichen in Längsrichtung des Kraftfahrzeuges führen, wobei der Bolzen 7 an dem hakenförmigen Fangblech 6 im Bereich der Aussparung annähernd formschlüssig zum Anliegen kommt.

In Fig. 2 ist eine Ansicht des Schwellers 1 und der Sitzschiene 2 im Schnitt gemäß der Linie II-II in Fig. 1 dargestellt. Die Länge des Bolzens 7 ist derart vorgesehen, das er sich von dem Schweller 1 ausgehend durch die Aussparung des hakenförmigen Fangbleches 6 und über dieses hinaus erstreckt. Damit ist gewährleistet, daß die Verbindung zwischen der Sitzschiene 2 und dem Schweller 1 selbst bei stärkeren Verformungen der Karosserie des Kraftfahrzeugs, also auch insbesondere des Fahrzeugbodens des Kraftfahrzeugs sowie des Schwellers 1, aufgrund eines Herausgleitens des Bolzens 7 aus dem Eingriff des hakenförmigen Fangbleches 6 nicht gelöst wird.

Der Bolzen 7 ist in Vorwärtsfahrtrichtung des Kraftfahrzeugs, welche in Fig. 1 durch einen Pfeil angegeben ist, vor dem hakenförmigen Fangblech 6 angeordnet, so daß eine Bewegung der Sitzschiene 2 in Vorwärtsfahrtrichtung blockiert ist. Dadurch wird bei einem Crash-Fall eine Verschiebung des Fahrgastsitzes und eine daraus resultierende mögliche Verletzung von Fahrgästen vermieden.

Darüber hinaus ist der Schweller 1 in vertikaler Richtung über den Bolzen 7 und das hakenförmige Fangblech 6 an der Sitzschiene 2, welche eine hohe Biegesteifigkeit aufweist, abgestützt. Damit wird einer Verformung des Schwellers 1, wie zum Beispiel Einknicken bei einem Crash-Fall, durch die zusätzliche Abstützung und Versteifung der Karosserie entgegengewirkt.

Fig. 3 zeigt das hakenförmige Fangblech 6 in einer Seitenansicht, wobei der Bolzen 7 in der Aussparung angeordnet ist ohne das hakenförmige Fangblech 6 zu berühren. Die Ausgestaltung der Sicherheitseinrichtung 4 der Sitzschiene 2 mit dem hakenförmigen Fangblech 6 und der Sicherheitseinrichtung 5 des Schwellers 1 mit dem Bolzen 7 erlaubt bei der Herstellung und bei der Montage große Fertigungstoleranzen, wodurch sich die Fertigungs- und Montagekosten verringern. Darüber hinaus können auch Gebrauchtwagen mit diesem Sicherheitskonzept nachgerüstet werden.

In Fig. 4 ist ein Fangblech 8 mit einer Öffnung 9 dargestellt, in welche der Bolzen 7 eingreift. Das Fangblech 8 kann anstatt dem hakenförmigen Fangblech 7 an der Sitzschiene 2 befestigt werden, wobei eine Bewegung der Sitzschiene 2 nicht nur in Vorwärtsfahrtrichtung des Kraftfahrzeugs sondern auch in entgegengesetzter Richtung gegenüber dem Schweller 2 begrenzt ist. Auch in diesem Fall sind der Bolzen 7 und das Fangblech 8 in normaler Einbaulage, also vor einem Crash-Fall, zueinander beabstandet angeordnet.

Fig. 5 zeigt ein weiteres doppelhakenförmig ausgebildetes Fangblech 10 der Sicherheitseinrichtung 4 der Sitzschiene 2, welches an jeder seiner Stirnseiten eine Aussparung aufweist, in die ein erster, in Längsrichtung des Kraftfahrzeuges vor dem doppelhakenförmigen Fangblech 10 angeordneter Bolzen 11 beziehungsweise ein in Längsrichtung hinter dem Fangblech 10 angeordneter zweiter Bolzen 12 der Sicherheitseinrichtung 5 des Schwellers 1 eingreift. Mit dieser Anordnung wird ebenfalls eine Bewegung der Sitzschiene 2 gegenüber dem Schweller 1 in Vorwärtsfahrtrichtung sowie Rückwärtsfahrtrichtung des Kraftfahrzeugs begrenzt.

Darüber hinaus ist den Ausführungsformen gemäß Fig. 4 und Fig. 5 gemeinsam, daß der Schweller 1 bei einem Crash-Fall in vertikaler Richtung von der Sitzschiene 2 gestützt wird und eine Versteifung der Karosserie des Kraftfahrzeugs die passive Sicherheit erhöht.

Es liegt selbstverständlich im Ermessen des Fachmannes, die vorbeschriebenen Ausgestaltungen der Sicherheitseinrichtung 4 der Sitzschiene 2 an dem Schweller 1 zu befestigen und die Ausgestaltungen der Sicherheitseinrichtung 5 des Schwellers 1 an der Sitzschiene 2 vorzusehen.

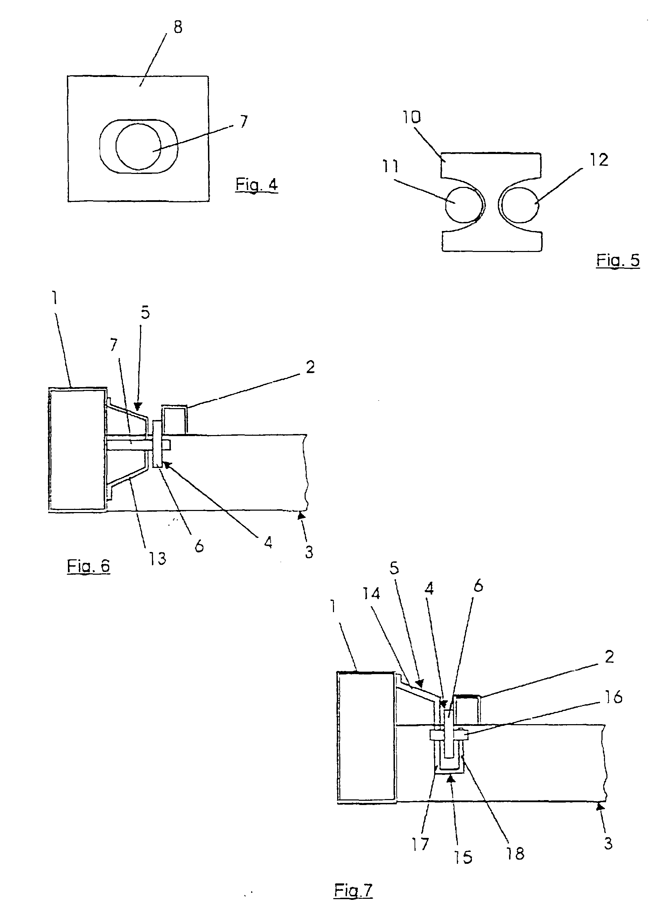

Wie in Fig. 6 dargestellt, kann die Sicherheitseinrichtung 5 des Schwellers 1 eine Crash-Konsole 13 aufweisen, welche mit dem Schweller 1 und dem Bolzen 7 verbunden ist, wobei sich der Bolzen 7 in seiner Länge derart über die Crash-Konsole 13 hinaus erstreckt, daß er in die Aussparung des hakenförmigen Fangbleches 6 eingreift.

Der Bolzen 7 ist mit dem Schweller 1 und im Bereich vor dem Eingriff in das hakenförmige Fangblech 6 mit der Crash-Konsole 13 verbunden. Damit ist eine feste Aufnahme des Bolzens 7 in der Crash-Konsole 13 gewährleistet.

Die Crash-Konsole 13 ist als ein taschenartiges Stanzbiegeteil bzw. Hohlteil ausgebildet und mit dem Schweller 1 wenigstens abschnittsweise verschweißt.

Durch die besondere Ausgestaltung der Crash-Konsole 13 als Hohlteil weist sie eine hohe Stabilität zur Übertragung von Kräften zwischen der Sitzschiene 2 und dem Schweller 1 quer zur Längsachse des Kraftfahrzeugs auf und stellt somit einen Seitenaufprallschutz dar.

Gemäß Fig. 7 ist die Sicherheitseinrichtung 5 des Schwellers 1 mit einem Stahlblechteil 14 versehen, welches das hakenförmige Fangblech 6 mit einem wenigstens annähernd u-förmig ausgebildeten Abschnitt 15 untergreift. Im Bereich der Aussparung des hakenförmigen Fangbleches 6 ist eine Hülse 16 angeordnet, welche sich von einem Schenkel 17 des u-förmigen Abschnittes 15 durch die Aussparung des hakenförmigen Fangbleches 6 hindurch bis zu einem zweiten Schenkel 18 des Abschnittes 15 erstreckt.

Die Hülse 16 ist mit den beiden Schenkeln 17, 18 verschweißt und greift bei einer Verschiebung der Sitzschiene 2 gegenüber dem Schweller 1 in Vorwärtsfahrtrichtung in das hakenförmige Fangblech 6 ein, wodurch eine Verbindung zwischen dem Schweller 1 und der Sitzschiene 2 über das Stahlblechteil 14 hergestellt ist. Damit wird die Versteifung der Karosserie des Kraftfahrzeugs erhöht und eine Deformation des Schwellers 1 bei einem Crash-Fall durch vertikale Abstützung an der Sitzschiene 2 vermieden. Zusätzlich werden über das Stahlblechteil 14 bei einem Unfall Kräfte quer zur Längsachse des Kraftfahrzeugs von dem Schweller 1 auf die Sitzschiene 2 übertragen, womit es sich ebenfalls als Seitenaufprallschutz eignet.

Darüber hinaus können die Bolzen 7, 11, 12, die Fangbleche 6, 8, 10, die Crash-Konsole 13 und das Stahlblechteil 14 anstatt über eine Verschweißung auch über eine andere für den Anwendungsfall geeignete Verbindung, wie beispielsweise Verschraubung, mit dem Schweller 1 oder der Sitzschiene 2 verbunden sein.

In einer weiteren von den vorliegenden Ausführungsbeispielen abweichenden, nicht dargestellten Ausführungsform kann es vorgesehen sein, die Fangbleche 6, 8, 10 auch einstückig mit der Sitzschiene 2 oder dem Schweller 1 auszubilden.

## Patentansprüche

1. Kraftfahrzeug mit wenigstens einem seitlich eines Schwellers angeordneten Fahrgastsitz, welcher auf in Längsrichtung des Kraftfahrzeuges verlaufenden und über ein Sitzuntergestell mit einem Fahrzeugboden fest verbundenen Sitzschienen angeordnet ist,
**dadurch gekennzeichnet,**
daß der Schweller (1) und die an den Schweller (1) angrenzende Sitzschiene (2) jeweils einander zugeordnete Sicherheitseinrichtungen (4, 5) aufweisen, die in Längsrichtung des Kraftfahrzeugs auf Abstand zueinander angeordnet sind und derart miteinander in Wirkverbindung bringbar sind, daß die Sitzschiene (2) und der Schweller (1) über die Sicherheitseinrichtungen (4, 5) bei einer hohen dynamischen Belastung des Fahrgastsitzes und/oder des Schwellers (1) verbunden sind.

2. Kraftfahrzeug nach Anspruch 1,
**dadurch gekennzeichnet,**
daß die Verbindung zwischen den Sicherheitseinrichtungen (4, 5) eine Bewegung der Sitzschiene (2) in Fahrzeuglängsrichtung blockiert.

3. Kraftfahrzeug nach Anspruch 1,
**dadurch gekennzeichnet,**
daß die Verbindung zwischen den Sicherheitseinrichtungen (4, 5) derart ausgebildet ist, daß der Schweller (1) in vertikaler Richtung von der Sitzschiene (2) abgestützt ist.

4. Kraftfahrzeug nach Anspruch 1,
**dadurch gekennzeichnet,**
daß die Sicherheitseinrichtung (4) der Sitzschiene (2) ein hakenförmiges Fangblech (6) aufweist.

5. Kraftfahrzeug nach Anspruch 4,
**dadurch gekennzeichnet,**
daß die Sicherheitseinrichtung (5) des Schwellers (1) wenigstens einen Bolzen (7) oder einen Stift aufweist.

6. Kraftfahrzeug nach Anspruch 5,
**dadurch gekennzeichnet,**
daß der Bolzen (7) oder Stift bei einer Relativbewegung zwischen der Sitzschiene (2) und dem Schweller (1) in eine ihm zugewandte Aussparung des Fangbleches (6) wenigstens annähernd formschlüssig eingreift.

7. Kraftfahrzeug nach Anspruch 6,
**dadurch gekennzeichnet,**
daß der Bolzen (7) oder Stift in Vorwärtsfahrtrichtung des Kraftfahrzeugs vor dem Fangblech (6) angeordnet ist und bei einer Verschiebung der Sitzschiene (2) gegenüber dem Schweller (1) in Vorwärtsfahrtrichtung oder einer Verschiebung des Schwellers (1) gegenüber der Sitzschiene (2) in Rückwärtsfahrtrichtung in die Aussparung des Fangbleches (6) eingreift.

8. Kraftfahrzeug nach Anspruch 1,
**dadurch gekennzeichnet,**
daß die Sicherheitseinrichtung (5) des Schwellers (1) zu der Sicherheitseinrichtung (4) der Sitzschiene (2) in Längsrichtung des Kraftfahrzeugs auf Abstand angeordnet ist und diese wenigstens teilweise umgreift.

9. Kraftfahrzeug nach Anspruch 1,
**dadurch gekennzeichnet,**
daß die Sicherheitseinrichtung (4) der Sitzschiene (2) ein doppelhakenförmig ausgebildetes Fangblech (10) mit zwei Aussparungen aufweist und die Sicherheitseinrichtung (5) des Schwellers (1) mit zwei Bolzen (11, 12) versehen ist, wobei das doppelhakenförmige Fangblech (10) in Längsrichtung des Kraftfahrzeugs zwischen den Bolzen (11, 12) angeordnet ist.

10. Kraftfahrzeug nach Anspruch 9,
**dadurch gekennzeichnet,**
daß jeweils eine Aussparung zu dem vorderen Bolzen (11) und die andere Aussparung zu dem hinteren Bolzen (12) hin gerichtet ist, so daß jeweils einer der Bolzen (11, 12) bei einer Relativbewegung in Längsrichtung des Kraftfahrzeugs zwischen dem Schweller (1) und der Sitzschiene (2) in die ihm zugewandte Aussparung eingreift.

11. Kraftfahrzeug nach Anspruch 5,
**dadurch gekennzeichnet,**
daß die Sicherheitseinrichtung (5) des Schwellers (1) eine Crash-Konsole (13) aufweist, welche mit dem Schweller (1) und dem Bolzen (7) verbunden ist.

12. Kraftfahrzeug nach Anspruch 4,
**dadurch gekennzeichnet,**
daß die Sicherheitseinrichtung (5) des Schwellers (1) ein Stahlblechteil (14) aufweist, welches das hakenförmige Fangblech (6) mit einem wenigstens annähernd u-förmig ausgebildeten Abschnitt (15) untergreift und im Bereich der Aussparung des hakenförmigen Fangbleches (6) mit einer Hülse (16) versehen ist, welche sich von einem Schenkel (17) des u-förmigen Abschnittes (15) durch die Aussparung hindurch bis zu einem zweiten Schenkel (18) des Abschnittes (15) erstreckt.
